# EUROPEAN PATENT SPECIFICATION

(11) **EP 1 010 227 B1**
(45) Date of publication and mention of the grant of the patent: **18.12.2002**
(21) Application number: 98941590.6
(22) Date of filing: 03.09.1998
(51) Int. Cl.: H02G 15/184, H02G 15/103

(54) **ELECTRIC CABLE JOINTS AND METHODS OF MAKING THEM**
ELEKTRISCHE KABELVERBINDUNGEN UND DEREN HERSTELLUNGSVERFAHREN
JOINTS DE CABLES ELECTRIQUES ET PROCEDE DE FABRICATION

(30) Priority: 05.09.1997 GB 9718925
(43) Date of publication of application: 21.06.2000
(73) Proprietor: Pirelli Cables (2000) Limited, London W1K 4QZ (GB)
(72) Inventor: BROAD, Alan James, Bodmin, Cornwall PL30 4AN (GB); LINDSEY, Graham Peter, Belvedere, Kent DA17 5QW (GB); TRIM, Laurence, Richard, Sidcup, Kent DA14 6RQ (GB)
(74) Representative: Abbie, Andrew Kenneth
(86) International application number: GB9802662
(87) International publication number: WO99013547

(56) References cited:
- EP-A- 0 595 708
- WO-A-86/02210

## Description

This invention relates to joints for electric cables and to methods of making them. More particularly, it relates to joints for cables with polymeric insulation for service at high voltages (including "supertension" cables).

Such cables are manufactured by an extrusion process followed usually by heat-treatment for curing (crosslinking) and almost always by force cooling with water, and it is inherent in this process that there are residual stresses in the insulation. It is desirable to joint such cables with resilient insulating bodies that are shrunk onto the cable insulation by release of inherent elasticity (on withdrawal of a support on which the body was previously stretched) or by heat-shrink techniques, and such bodies apply to the insulation substantial forces that may vary substantially with load cycling of the cable in service. If such stresses result in any substantial movement of the end of the cable insulation, a void may arise by various mechanisms and may ultimately result in electrical discharges and failure of the joint.

WO8602210 describes an electric cable joint arrangement according to the preamble of claim 1.

It also describes a technique in which grooves are cut into the circumferential surface of the insulation on each cable and internal flanges on a metallic sleeve surrounding the conductor joint area enter the grooves to provide a mechanical interlock from the insulation of one cable to the insulation of the other. This technique is in commercial use, but does not altogether eliminate the risk because it is only effective to the extent that the flanges are dimensioned to bear effectively on both sides of the respective groove in which they engage, which is not only dependent on the dimensional accuracy of cutting but also on the absence of any relative movement after the grooves have been cut and before the sleeve can be fitted and on the dimensional accuracy and reproducibility of the conductor jointing process; indeed it may become wholly ineffective if the two cable ends should behave differently and produce a substantial resultant force on the metallic sleeve; this is a real risk, especially since it is frequently necessary to joint cables that differ in age, in insulation formulation, in manufacturing source, in thermal history (all of which may substantially affect the residual stresses in the insulation), in design electrical stress (and therefore in insulation thickness), in conductor size (and therefore in insulation diameter) or in more than one of these.

The present invention provides joints, and methods of making them, which are tolerant of the small dimensional variations that are likely to be encountered and in which the insulation can be secured at an early stage in the jointing process, if desired even before the step of cutting back the insulation to expose the metallic conductor, and which are effective even if the insulation ends behave quite differently.

In accordance with an aspect of the invention, an electrical cable joint arrangement comprising two cables, each cable having a metallic conductor surrounded by extruded polymeric insulation, contiguous ends of the metallic conductors being aligned and connected together by a conductor joint, screening means extending over the conductor joint, and a resilient insulating body shrunk onto the cable insulation to insulate the joint arrangement, characterised in that at least one pin extends in a generally radial direction through a close-fitting bore in the insulation of each cable and is embedded into the metallic conductor within it, the screening means extending over the area of each pin.

The invention is primarily intended for use in "one-piece" joints in which the resilient insulating body provides the whole of the joint insulation, but may also be aplied to some designs of composite joint in which the resilient insulating body will be an electrical stress control cone for one of the cable ends.

Cables to which the present invention is applicable will almost always have a semiconducting conductor screen bounding the insulation on its inner surface and a semiconducting dielectric screen bounding it on its outer surface, a surrounding watertight sheath (jacket) and, if the sheath is insulating, a metallic screen between the dielectric screen and the jacket. In the case of a cable with more than one conductor (in practice usually a three-core or four-core cable), the sheath and possibly the metallic screen will be common to all the conductors; this option is seldom used at the voltages for which this invention is primarily intended, and does not require further discussion, since the changes required are routine ones.

The dielectric screen will be cut back from the joint area and either reinstated over the resilient insulating body (or by a semiconducting outer layer forming part of it) or terminated at each end of the joint in a stress cone shaped to limit concentrations of electrical stress. The sheath (and metallic shield if present) will be cut back and reinstated in the normal way.

Preferably the screening means extending over the conductor joint and the area of the pins is or includes a semiconducting tubular insert within (and forming part of) the resilient insulating body.

Preferably there is at least one pair of pins for each of the two cable ends, to preserve symmetry and allow the forces required to insert the pins to balance each other. Two or three pairs of pins for each cable end will usually be preferred.

Each pin should be a close fit in the bore provided in the insulation to accommodate it. The pins may be of metallic or non-metallic material, provided they are hard enough to embed securely into the metallic conductor. Stainless steel pins are preferred, but alternatively aluminium alloy pins may be used if the conductor is of aluminium or brass pins if it is of copper. Composite pins in which only the radially inner end is of metal may be used in some cases, one of which will be discussed below. The pins could be tubular, but are preferably solid.

Preferably the cut-back end faces of the cable insulation are supported by engagement with relatively rigid material. We prefer to use a hard-setting resinous material to fill and so eliminate all void spaces within the radius of the cable insulation, but another possibility is for the end faces to abut flanges on a joint ferrule or on an auxiliary metal sleeve. Preferably a metal sleeve surrounds the joint area within (and so forming part of) the screen, to assist dissipation of heat from the joint area.

Preferably a rigid (metallic or non-metallic) annular member encircles each cable end at the location of the pin(s) and engages the end(s) of the pin(s), directly or indirectly, to resist any tendency they may have to move radially outwards. For example, this annular member may support grub screws bearing on the ends of individual pins; or if the pins are long enough to project from the insulation surface and are machined if necessary to achieve sufficient dimensional accuracy, the ring may simply be pushed on to engage the pins directly - its bore may be tapered to increase tolerance in radial dimensions if desired. Alternatively a surrounding metal sleeve as described in the preceding paragraph may fulfil this function, and may engage the ends of the pins through a body of resin formed *in situ* and preferably the same body as fills other void spaces as previously described.

The invention includes a method of making an electric cable joint between two cables each having a metallic conductor surrounded by extruded polymeric insulation comprising cutting back the cable ends to expose the insulation; forming at least one bore extending in a generally radial direction through the insulation of each cable and driving a close-fitting pin through each such bore until it is embedded into the metallic conductor within it, aligning and connecting together contiguous ends of the metallic conductors, and providing screening means extending over the conductor joint and the area of each said pin and a resilient insulating body shrunk onto the cable insulation to insulate the joint.

The invention will be further described, by way of example, with reference to the accompanying drawings in which:
Figure 1 is a diagrammatic cross-section through a preferred form of cable joint in accordance with the invention; and
Figure 2 is a similar cross-section of an alternative form of joint. In each case the conventional outer parts of both cables and joint are omitted for simplicity.

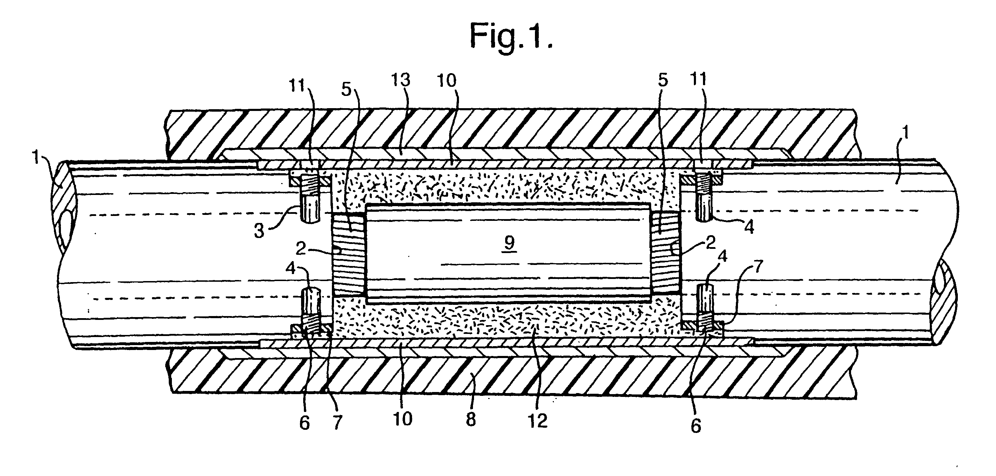

In making the joint shown in Figure 1, the outer parts of the cables, down to and including the dielectric screen, are stripped back in the normal way to expose the cable insulation 1. Either before or after the insulation is in turn stripped back to form end-faces 2, two or three pairs of bores 3 are drilled substantially through the insulation of each cable end a short distance from the end-faces 2 or the place where they will be formed, as the case may be, and evenly spaced around the circumference. Blunt-ended stainless steel pins 4 are inserted in the bores 3 and driven inwards, pair by pair, using a conventional hydraulic compression tool, so as to become firmly embedded in the metallic conductor 5 of the respective cable, which is of aluminium in this case. The outer ends of the pins 4 are engaged by individual grub screws 6 threaded in respective annular metal bodies 7 to prevent displacement. An insulating sleeve 8, radially stretched and supported by a tubular mandrel (not shown), is threaded over one of the cable ends and temporarily pushed back clear of the joint region - it will be more fully described later. The metallic conductors 5, 5 are now connected together by a compressed or soldered ferrule 9 (or by welding) and a split metal sleeve 10 is assembled round the joint area, extending over the areas of the pins 4: preferably the end of the cut-back insulation is shaved down to accommodate this sleeve without any increase in diameter. The split sleeve 10 is connected electrically to the ferrule (or if there is no ferrule directly to the cable conductors) and has at least one aperture 11 through which a suitably fluid but hardenable resin 12 is injected to fill all void spaces within it. Thus longitudinal forces tending to move the ends of the insulation are resisted by the jointed conductors, while any tendency to distortion is resisted by the resin. The insulating sleeve 8 is now positioned centrally over the conductor joint and collapsed onto it by withdrawing the mandrel using any suitable gripping devices. If the mandrel is split, its parts are separated and returned for re-use: if seamless, it is cut free and discarded. The insulating sleeve 8 has embedded within it a semiconducting insert 13, and this fits over and completely and tightly encloses the split metal sleeve 10 (and the conductor joint and resin within).

Outer parts of the joint are then completed in a conventional way.

In a first modified form of joint (not illustrated), the annular member 7 and grub screws 6 are omitted, and the spaces filled by the resin include the parts of the bores 3 above the tops of the pins 4.

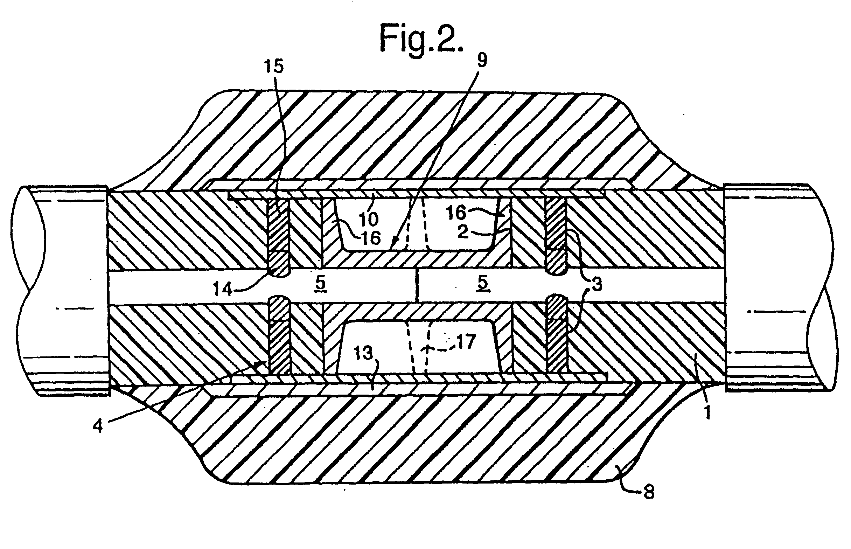

A second modified form of joint is shown in figure 2 and is a "dry" option in the sense that the use of fluid resin is avoided. It is similar to the joint of Figure 1 except for two features: first, the pins 4 are of composite construction with aluminium alloy end parts 14 and hard plastics bodies 15 which can be pared down after driving to finish flush with the prepared surface of the insulation 1 and so be directly supported by the split sleeve 10 without requiring any filling; and second, the ferrule 9 has flanges 16 which tightly abut the insulation end faces 2 to support them against distortion. These flanges also help dissipation of heat from the conductor joint region, and an additional central flange 17 could be added for this purpose if desired. Optionally the spaces between the flanges 16 (or 16 and 17) can be filled with preshaped components of metal or of plastics material, or if preferred by wrapping with tape.

## Claims

1. An electric cable joint arrangement comprising two cables, each cable having a metallic conductor (5) surrounded by extruded polymeric insulation (1), contiguous ends of the metallic conductors (5) being aligned and connected together by a conductor joint (9), screening means (13) extending over the conductor joint (9), and a resilient insulating body (8) shrunk onto the cable insulation (1) to insulate the joint arrangement, **characterised in that** at least one pin (4) extends in a generally radial direction through a close-fitting bore (3) in the insulation (1) of each cable and is embedded into the metallic conductor (5) within it, the screening means (13) extending over the area of each pin (4).

2. An electric cable joint arrangement as claimed in claim 1, in which the said resilient insulating body (8) forms the whole of the joint insulation.

3. An electric cable joint arrangement as claimed in claim 2, in which the said screening means (13) comprises a semiconducting tubular insert within and forming part of the resilient insulating body (8).

4. An electric cable joint arrangement as claimed in any one of claims 1-3, in which there is at least one pair of pins (4) for each of the two cable ends.

5. An electric cable joint arrangement as claimed in any one of claims 1-3, in which there are two or three pairs of pins (4) for each of the two cable ends.

6. An electric cable joint arrangement as claimed in any one of claims 1-5, in which the pins (4) are metallic.

7. An electric cable joint arrangement as claimed in any one of claims 1-5, in which the pins (4) are of stainless steel.

8. An electric cable joint arrangement as claimed in any one of claims 1-5, in which the cable conductors (5) are of aluminium and the pins (4) are of an aluminium alloy.

9. An electric cable joint arrangement as claimed in any one of claims 1-5, in-which the cable conductors (5) are of copper and the pins (4) of brass.

10. An electric cable joint arrangement as claimed in any one of claims 1-5, in which the pins (4) are composites in which only the radially inner end (14) is of metal.

11. An electric cable joint arrangement as claimed in any one of claims 1-10, in which the cut-back end faces of the cable insulation (1) are supported by engagement with relatively rigid material.

12. , An electric cable joint arrangement as claimed in claim 11, in which the said relatively rigid material is a hard-set resinous material (12) which fills and so eliminates all void spaces within the radius of the cable insulation (1).

13. An electric cable joint arrangement as claimed in claim 11, in which the said end faces abut flanges (16) on a joint ferrule (9) or on an auxiliary metal sleeve.

14. An electric cable joint arrangement as claimed in any one of claims 1-13, in which a rigid annular member (10) encircles each cable end at the location of the pin(s) (4) and engages the end(s) of the pin(s) (4), directly or indirectly.

15. An electric cable joint arrangement as claimed in any one of claims 1-13, in which a rigid annular member (7) encircles each cable end at the location of the pin(s) (4) and engages the end(s) of the pin(s) (4) through grub-screws (6).

16. An electric cable joint arrangement as claimed in any one of claims 1-15, in which a metal sleeve (10) surrounds the joint area within, and so forms part of, the screen (13).

17. An electric cable joint arrangement as claimed in claim 16, in which the said metal sleeve (10) extends over the ends of the pins (4) and engages them, directly or through a body of resin or other intermediate.

18. A method of making an electric cable joint between two cables each having a metallic conductor (5) surrounded by extruded polymeric insulation (1) comprising cutting back the cable ends to expose the insulation (1); forming at least one bore (3) extending in a generally radial direction through the insulation (1) of each cable and driving a close-fitting pin (4) through each such bore (3) until it is embedded into the metallic conductor (5) within it, aligning and connecting together contiguous ends of the metallic conductors (5), and providing screening means (13) extending over the conductor joint and the area of each said pin (4) and a resilient insulating body (8) shrunk onto the cable insulation (1) to insulate the joint.

19. A method of making an electric cable joint as claimed in claim 18, comprising driving at least one pair of pins (4) for each of the two cable ends.

20. A method of making an electric cable joint as claimed in claim 18 or claim 19, comprising driving two or three pairs of pins (4) for each of the two cable ends.

21. A method of making an electric cable joint as claimed in any one of claims 18-20, comprising fitting a rigid annular member (10) to encircle each cable end at the location of the pin(s) (4) and engage the end(s) of the pin(s) (4), directly or indirectly.

22. A method of making an electric cable joint as claimed in any one of claims 18-20, comprising fitting a rigid annular member (7) to encircle each cable end at the location of the pin(s) (4) and threading individual grub-screws (6) in the said rigid annular member (7) to engage the ends of the pins (4).

23. A method making an electric cable joint as claimed in any one of claims 18-22, comprising supporting the cut-back end faces of the cable insulation (1) by engagement with relatively rigid material (12).

24. A method of making an electric cable joint as claimed in claim 23, comprising using as the said relatively rigid material (12) a hard-setting resinous material which is injected into and fills void spaces within the radius of the cable insulation (1).

25. A method of making an electric cable joint as claimed in claim 23, in which the said end faces are supported by abutting flanges (16) on a joint ferrule (9) or on an auxiliary metal sleeve.

26. A method of making an electric cable joint as claimed in any one of claims 18-25, comprising placing a metal sleeve (10) to surround the joint area within, and so form part of, the screen (13).

27. A method of making an electric cable joint as claimed in claim 26, comprising dimensioning and placing the said metal sleeve (10) so that it extends over the ends of the said pins (4) and engages them, directly or indirectly.

28. A method of making an electric cable joint as claimed in any one of claims 18-27, comprising forming said at least one bore (3) by drilling through the insulation.

29. A method of making an electric cable joint as claimed in any one of claims 18-28, comprising driving said close-fitting pin (4) with a hydraulic compression tool.

## Patentansprüche

1. Eine elektrische Kabelverbindungsanordnung, umfassend zwei Kabel, wobei jedes Kabel einen metallischen Leiter (5), der von extrudierter polymerischer Isolation (1) umgeben ist, aufweist, wobei anstoßende Enden der metallischen Leiter (5) ausgerichtet und miteinander durch einen Leiterverbinder (9) verbunden sind, Abschirmmittel (13), die sich über die Leiterverbindung erstrecken, und einen nachgiebigen Isolationskörper (8), der zum Isolieren der Verbindungsanordnung auf die Kabelisolation (1) aufgeschrumpft ist,
**dadurch gekennzeichnet, dass** sich zumindest ein Stift (4) in einer allgemein radialen Richtung durch eine eng sitzende Bohrung (3) in der Isolation jedes Kabels erstreckt und in den darin befindlichen metallischen Leiter (5) eingebettet ist, wobei sich die Abschirmmittel (13) über den Bereich jedes der Stifte (4) erstrecken.

2. Eine elektrische Kabelverbindungsanordnung, wie in Anspruch 1 beansprucht, in welcher der nachgiebige Isolationskörper (8) die gesamte Verbindungsisolation ausbildet.

3. Eine elektrische Kabelverbindungsanordnung, wie in Anspruch 2 beansprucht, in der das Abschirmmittel (13) einen rohrförmigen Halbleitereinsatz in sich umfasst und der einen Teil des nachgiebigen Isolationskörpers (8) bildet.

4. Eine elektrische Kabelverbindungsanordnung, wie in einem der Ansprüche 1 bis 3 beansprucht, in der es zumindest ein Paar von Stiften (4) für jedes der zwei Kabelenden gibt.

5. Eine elektrische Kabelverbindungsanordnung, wie in einem der Ansprüche 1 bis 3 beansprucht, in der es zwei oder drei Paare von Stiften (4) für jedes der zwei Kabelenden gibt.

6. Eine elektrische Kabelverbindungsanordnung, wie in einem der Ansprüche 1 bis 5 beansprucht, in der die Stifte (4) metallisch sind.

7. Eine elektrische Kabelverbindungsanordnung, wie in einem der Ansprüche 1 bis 5 beansprucht, in der die Stifte (4) aus Edelstahl sind.

8. Eine elektrische Kabelverbindungsanordnung, wie in einem der Ansprüche 1 bis 5 beansprucht, in der die Kabelleiter (5) aus Aluminium sind und die Stifte (4) aus einer Aluminiumlegierung sind.

9. Eine elektrische Kabelverbindungsanordnung, wie in einem der Ansprüche 1 bis 5 beansprucht, in welcher die Kabelleiter (5) aus Kupfer und die Stifte (4) aus Messing sind.

10. Eine elektrische Kabelverbindungsanordnung, wie in einem der Ansprüche 1 bis 5 beansprucht, in welcher die Stifte (4) Komposite sind, in denen nur das radial innere Ende (14) aus Metall ist.

11. Eine elektrische Kabelverbindungsanordnung, wie in einem der Ansprüche 1 bis 10 beansprucht, in welcher die zurückgeschnittenen Endflächen der Kabelisolation (1) durch Eingriff mit relativ steifem Material gehaltert sind.

12. Eine elektrische Kabelverbindungsanordnung, wie in Anspruch 11 beansprucht, in welcher das relativ steife Material ein hartes harziges Material (12) ist, welches alle Leerräume ausfüllt und so innerhalb des Radius der Kabelisolation (1) beseitigt.

13. Eine elektrische Kabelverbindungsanordnung, wie in Anspruch 11 beansprucht, in welcher die Endflächen an Flansche (16) eines Verbindungsbundrings (9) oder einer Hilfsmetallmanschette anstoßen.

14. Eine elektrische Kabelverbindungsanordnung, wie in einem der Ansprüche 1 bis 13 beansprucht, in welcher ein steifes ringförmiges Element (10) jedes Kabelende an der Stelle der Stifte (4) umgibt und das/die Ende(n) des/der Stift(e) (4) direkt oder indirekt sichert.

15. Eine elektrische Kabelverbindungsanordnung, wie in einem der Ansprüche 1 bis 13 beansprucht, in welcher ein steifes ringförmiges Element (7) jedes Kabelende an der Stelle der Stifte (4) umgibt und durch Stiftschrauben (6) das/die Ende(n) des/der Stift(e) (4) sichert.

16. Eine elektrische Kabelverbindungsanordnung, wie in einem der Ansprüche 1 bis 15 beansprucht, in welcher eine Metallmanschette (10) den Verbindungsbereich darin umgibt und so einen Teil der Abschirmung (13) bildet.

17. Eine elektrische Kabelverbindungsanordnung, wie in Anspruch 16 beansprucht, in welcher sich die Metallmanschette (10) über die Enden der Stifte (4) erstreckt und direkt oder durch einen Polymerkörper oder anderes Zwischenstück mit ihnen in Eingriff kommt.

18. Ein Verfahren zur Herstellung einer elektrischen Kabelverbindung zwischen zwei Kabeln, die jedes einen metallischen Leiter, umgeben von einer extrudierten Polymerisolation (1) aufweisen, umfassend Zurückschneiden der Kabelenden, um die Isolation (1) freizulegen; Ausbilden zumindest einer Bohrung (3), die sich in allgemein radialer Richtung durch die Isolation (1) jedes Kabels erstreckt, und Eintreiben eines eng passenden Stifts (4) durch jede der Bohrungen (3), bis er in dem darin befindlichen metallischen Leiter (5) eingebettet ist, Ausrichten und miteinander Verbinden benachbarter Enden der metallischen Leiter (5) und Bereitstellen von Abschirmmitteln (13), welche über die Leiterverbindung und den Bereich jedes der Stifte (4) hinüberreichen und eines nachgiebigen Isolationskörpers (8), der zur Isolierung der Verbindung auf die Kabelisolation (1) aufgeschrumpft ist.

19. Ein Verfahren zur Herstellung einer elektrischen Kabelverbindung, wie in Anspruch 18 beansprucht, umfassend Eintreiben von zumindest einem Paar von Stiften (4) für jedes der zwei Kabelenden.

20. Ein Verfahren zur Herstellung einer elektrischen Kabelverbindung, wie in Anspruch 18 oder Anspruch 19 beansprucht, umfassend Eintreiben von zwei oder drei Paaren von Stiften (4) für jedes der zwei Kabelenden.

21. Ein Verfahren zur Herstellung einer elektrischen Kabelverbindung, wie in einem der Ansprüche 18 bis 20 beansprucht, umfassend Einpassen eines steifen ringförmigen Elements (10), um jedes Kabelende an der Stelle der Stifte (4) zu umgeben und das/die Ende(n) des/der Stift(e) (4) direkt oder indirekt zu sichern.

22. Ein Verfahren zur Herstellung einer elektrischen Kabelverbindung, wie in einem der Ansprüche 18 bis 20 beansprucht, umfassend Einpassen eines steifen ringförmigen Elements (7), um jedes Kabelende an der Stelle des/der Stift(e) (4) zu umgeben und Einschrauben individueller Stiftschrauben (6) in das steife ringförmige Element (7), um die Enden der Stifte (4) zu sichern.

23. Ein Verfahren zur Herstellung einer elektrischen Kabelverbindung, wie in einem der Ansprüche 18 bis 22 beansprucht, umfassend Unterstützen der zurückgeschnittenen Endflächen der Kabelisolation (1) durch Ineingriffbringen mit relativ steifem Material (12).

24. Ein Verfahren zur Herstellung einer elektrischen Kabelverbindung, wie in Anspruch 23 beansprucht, umfassend Verwenden als relativ steifes Material (12), ein aushärtendes harziges Material, welches in Hohlräume hineingespritzt wird und diese innerhalb des Radius der Kabelisolation (1) ausfüllt.

25. Ein Verfahren zur Herstellung einer elektrischen Kabelverbindung, wie in Anspruch 23 beansprucht, in welchem die Endflächen durch anstoßende Flansche (16) auf einem Verbindungsbundring (9) oder auf einer Hilfsmetallmanschette unterstützt werden.

26. Ein Verfahren zur Herstellung einer elektrischen Kabelverbindung, wie in einem der Ansprüche 18 bis 25 beansprucht, umfassend Plazieren einer Metallmanschette (10) zum Umgeben des Verbindungsbereichs darin, und somit zum Ausbilden von Teilen der Abschirmung (13).

27. Ein Verfahren zur Herstellung einer elektrischen Kabelverbindung, wie in Anspruch 26 beansprucht, umfassend Dimensionierung und Platzierung der Manschette (10), so dass sie sich über die Enden der Stifte (4) erstreckt und sie direkt oder indirekt sichert.

28. Ein Verfahren zur Herstellung einer elektrischen Kabelverbindung, wie in einem der Ansprüche 18 bis 27 beansprucht, umfassend Ausbilden der zumindest einen Bohrung (3) durch Bohren durch die Isolation.

29. Ein Verfahren zur Herstellung einer elektrischen Kabelverbindung, wie in einem der Ansprüche 18 bis 28 beansprucht, umfassend Eintreiben der eng passenden Stifte (4) mit einem hydraulischen Kompressionswerkzeug.

## Revendications

1. Jonction de câbles électriques comprenant deux câbles, chaque câble comportant un conducteur métallique (5) entouré d'un isolant en polymère extrudé (1), les extrémités contiguës des conducteurs métalliques (5) étant alignées et reliées ensemble par un raccord conducteur (9), un moyen de blindage (13) s'étendant sur le raccord conducteur (9), et un corps isolant élastique (8) rétracté sur l'isolant (1) des câbles pour isoler la jonction, **caractérisé en ce qu'**au moins une broche (4) s'étend dans une direction globalement radiale dans un alésage ajusté (3) réalisé dans l'isolant (1) de chaque câble et est encastrée dans le conducteur métallique (5) qui est à l'intérieur, le moyen de blindage (13) s'étendant sur la superficie de chaque broche (4).

2. Jonction de câbles électriques selon la revendication 1, dans laquelle ledit corps isolant élastique (8) forme la totalité de l'isolation de la jonction.

3. Jonction de câbles électriques selon la revendication 1, dans laquelle ledit moyen de blindage (13) comprend un insert tubulaire semi-conducteur à l'intérieur et formant partie du corps isolant élastique (8).

4. Jonction de câbles électriques selon l'une quelconque des revendications 1 à 3, dans laquelle il y a au moins une paire de broches (4) pour chacune des deux extrémités de câble.

5. Jonction de câbles électriques selon l'une quelconque des revendications 1 à 3, dans laquelle il y a deux ou trois paires de broches (4) pour chacune des deux extrémités de câble.

6. Jonction de câbles électriques selon l'une quelconque des revendications 1 à 5, dans laquelle les broches (4) sont métalliques.

7. Jonction de câbles électriques selon l'une quelconque des revendications 1 à 5, dans laquelle les broches (4) sont en acier inoxydable.

8. Jonction de câbles électriques selon l'une quelconque des revendications 1 à 5, dans laquelle les conducteurs (5) des câbles sont en aluminium et les broches (4) sont en alliage d'aluminium.

9. Jonction de câbles électriques selon l'une quelconque des revendications 1 à 5, dans laquelle les conducteurs (5) des câbles sont en cuivre et les broches (4) sont en laiton.

10. Jonction de câbles électriques selon l'une quelconque des revendications 1 à 5, dans laquelle les broches (4) sont des composites dans lesquels seule l'extrémité radialement intérieure (14) est en métal.

11. Jonction de câbles électriques selon l'une quelconque des revendications 1 à 10, dans laquelle les faces d'extrémité coupées de l'isolant (1) des câbles sont supportées par une mise en prise avec un matériau relativement rigide.

12. Jonction de câbles électriques selon la revendication 11, dans laquelle ledit matériau relativement rigide est un matériau résineux durci (12) qui élimine, en les remplissant, tous les espaces vides compris dans le rayon de l'isolant (1) des câbles.

13. Jonction de câbles électriques selon la revendication 11, dans laquelle lesdites faces d'extrémité sont en appui contre des brides (16) d'une virole (9) ou d'un manchon métallique auxiliaire.

14. Jonction de câbles électriques selon l'une quelconque des revendications 1 à 13, dans laquelle un élément annulaire rigide (10) encercle chaque extrémité de câble à l'endroit de la ou des broche(s) (4) et est en prise avec l'extrémité de la ou les broche(s) (4), directement ou indirectement.

15. Jonction de câbles électriques selon l'une quelconque des revendications 1 à 13, dans laquelle un élément annulaire rigide (7) encercle chaque extrémité de câble à l'endroit de la ou des broche(s) (4) et est en prise avec l'extrémité de la ou les broche(s) (4) via des vis sans tête (6).

16. Jonction de câbles électriques selon l'une quelconque des revendications 1 à 15, dans laquelle un manchon métallique (10) entoure la région du raccord à l'intérieur, et donc fait partie, du blindage (13).

17. Jonction de câbles électriques selon la revendication 16, dans laquelle ledit manchon métallique (10) s'étend par dessus les extrémités des broches (4) et est en prise avec elles, directement ou via un corps en résine ou un autre intermédiaire.

18. Procédé de fabrication d'une jonction de câbles électriques entre deux câbles comportant chacun un conducteur métallique (5) entouré d'un isolant en polymère extrudé (1), comprenant le fait de couper les extrémités de câbles pour exposer l'isolant (1) ; former au moins un alésage (3) s'étendant dans une direction globalement radiale à travers l'isolant (1) de chaque câble et enfoncer une broche ajustée (4) dans chacun de ces alésages (3) jusqu'à ce qu'elle soit encastrée dans le conducteur métallique (5) qui est à l'intérieur, aligner et relier ensemble les extrémités contiguës des conducteurs métalliques (5), et placer un moyen de blindage (13) s'étendant sur le raccord conducteur et la superficie de chacune desdites broches (4) et un corps isolant élastique (8) rétracté sur l'isolant (1) des câbles pour isoler la jonction.

19. Procédé de fabrication d'une jonction de câbles électriques selon la revendication 18, comprenant le fait d'enfoncer au moins une paire de broches (4) pour chacune des deux extrémités de câble.

20. Procédé de fabrication d'une jonction de câbles électriques selon la revendication 18 ou 19, comprenant le fait d'enfoncer deux ou trois paires de broches (4) pour chacune des deux extrémités de câble.

21. Procédé de fabrication d'une jonction de câbles électriques selon l'une quelconque des revendications 18 à 20, comprenant le fait de placer un élément annulaire rigide (10) pour encercler chaque extrémité de câble à l'endroit de la ou des broche(s) (4) et pour le mettre en prise avec l'extrémité de la ou les broche(s) (4), directement ou indirectement.

22. Procédé de fabrication d'une jonction de câbles électriques selon l'une quelconque des revendications 18 à 20, comprenant le fait de placer un élément annulaire rigide (7) pour encercler chaque extrémité de câble à l'endroit de la ou des broche(s) (4) et de visser des vis sans tête individuelles (6) dans ledit élément annulaire rigide (7) pour le mettre en prise avec les extrémités des broches (4).

23. Procédé de fabrication d'une jonction de câbles électriques selon l'une quelconque des revendications 18 à 20, comprenant le fait de supporter les faces d'extrémité coupées de l'isolant (1) des câbles par une mise en prise avec un matériau relativement rigide (12).

24. Procédé de fabrication d'une jonction de câbles électriques selon la revendication 23, comprenant le fait d'utiliser comme matériau relativement rigide (12) un matériau résineux durci qui est injecté dans et remplit les espaces vides compris dans le rayon de l'isolant (1) des câbles.

25. Procédé de fabrication d'une jonction de câbles électriques selon la revendication 23, dans lequel lesdites faces d'extrémité sont supportées par des brides d'appui (16) d'une virole de raccord (9) ou d'un manchon métallique auxiliaire.

26. Procédé de fabrication d'une jonction de câbles électriques selon l'une quelconque des revendications 18 à 25, comprenant le fait de placer un manchon métallique (10) pour entourer la région du raccord à l'intérieur, et donc former une partie, du blindage (13).

27. Procédé de fabrication d'une jonction de câbles électriques selon la revendication 23, comprenant le fait de dimensionner et de placer ledit manchon métallique (10) de façon à ce qu'il s'étende par dessus les extrémités des broches (4) et se mette en prise avec elles, directement ou indirectement.

28. Procédé de fabrication d'une jonction de câbles électriques selon l'une quelconque des revendications 18 à 27, comprenant le fait de former ledit au moins un alésage (3) en effectuant un perçage dans l'isolant.

29. Procédé de fabrication d'une jonction de câbles électriques selon l'une quelconque des revendications 18 à 28, comprenant le fait d'enfoncer ladite broche ajustée (4) à l'aide d'un outil de compression hydraulique.
